# EUROPÄISCHE PATENTSCHRIFT

(11) **EP 3 330 001 B1**
(45) Veröffentlichungstag und Bekanntmachung des Hinweises auf die Patenterteilung: **22.05.2024**
(21) Anmeldenummer: 17205578.2
(22) Anmeldetag: 05.12.2017
(51) Int. Cl.: B03C 3/49, B03C 3/02, B03C 3/06, B03C 3/017, B03C 3/36, F24H 9/00, F01N 3/01, F01N 3/08, F24H 1/36

(54) **HEIZKESSEL**
BOILER
CHAUDIÈRE

(30) Priorität: 05.12.2016 EP 16202161
(43) Veröffentlichungstag der Anmeldung: 06.06.2018
(73) Patentinhaber: Fröling Heizkessel- und Behälterbau, Gesellschaft m.b.H, 4710 Grieskirchen (AT)
(72) Erfinder: Hutterer, Ernst, 4710 Grieskirchen (AT)
(74) Vertreter: Jell, Friedrich

(56) Entgegenhaltungen:
- EP-A2- 2 926 909
- AT-A4- 516 061
- CN-U- 204 866 198
- DE-A1-102008 012 151
- DE-U1-202010 016 019

## Beschreibung

Die Erfindung betrifft einen Heizkessel mit einer Rauchgasführung, die mindestens einen Rauchgaszug aufweist, mit mindestens einem zur Erwärmung des Kesselwassers vorgesehenen Wärmetauscher, der wenigstens einen Rauchgaszug der Rauchgasführung ausbildet, mit zumindest einem beweglich gelagerten Wirbulator, der im Rauchgaszug des Wärmetauschers vorgesehen ist, und mit einem elektrostatischen Abscheider, der wenigstens eine Kollektorelektrode im Rauchgaszug des Wärmetauschers und mindestens eine Sprühelektrode aufweist, welche Kollektorelektrode mit Masse Heizkessels als Bezugspotential zum Potential der Sprühelektrode elektrisch verbunden ist.

Eine Kollektorelektrode eines elektrostatischen Abscheiders im Rauchgaszug eines Wärmetauschers eines Heizkessels vorzusehen, ist aus der DE202010016019U1 bekannt. Gemäß dieser bildet die Innenseite eines Wärmetauscherrohrs des Wärmetauschers die Kollektorelektrode aus. Zur mechanischen Abreinigung des Wärmetauscherrohrs, das einen Rauchgaszug der Rauchgasführung ausbildet, ist ein wendelförmiger Wirbulator vorgesehen, der axial entlang des Wärmetauscherrohrs bewegt werden kann. Die Verwendung des Rauchgaszugs des Wärmetauschers als Kollektorelektrode führt zwar zu einer relativ kompakten Bauform am Heizkessel, die Abscheidefläche der Kollektorelektrode ist jedoch vergleichsweise klein - was also den Abscheidegrad des elektrostatischen Abscheiders beschränkt. Derartige Heizkessel können daher enge Grenzwerte an Feinstaubwerten meist nicht einhalten.

Die DE102008012151A1 offenbart einen elektrostatischen Abscheider zur Reinigung von Rauchgas beispielsweise aus einer Verbrennungskammer. Die Kollektorelektrode des elektrostatische Abscheiders wird von einem elektrisch leitenden Kollektorrohr und von einem beweglich im Kollektorrohr gelagerten Wirbulator gebildet, der eine Wendel aufweist. Die elektrisch leitende Wendel ist über einen Schleifkontakt mit dem Kollektorrohr elektrisch verbunden, wobei Wendel und Kollektorrohr auf Erdpotential liegen.

Die Erfindung hat sich daher die Aufgabe gestellt, einen Heizkessel der eingangs geschilderten Art in der Konstruktion derart zu verändern, dass ohne Aufgabe der kompakten Bauweise des Heizkessels der Abscheidegrad des elektrostatischen Abscheiders erhöht werden kann.

Die Erfindung löst die gestellte Aufgabe durch die Merkmale des Anspruchs 1.

Bildet zumindest der beweglich gelagerte Wirbulator die Kollektorelektrode des elektrostatischen Abscheiders aus, kann zunächst die Abscheidefläche der Kollektorelektrode im Vergleich zum Stand der Technik, welcher sich auf die Innenseite des Wärmetauscherrohrs als Kollektorelektrode beschränkt, vergrößert und in weiterer Folge der Abscheidegrad des elektrostatischen Abscheiders erhöht werden. Zudem ist durch die verwirbelnde Wirkung der Abscheideflächen im Rauchgasstrom der Abscheidegrad weiter verbesserbar - insbesondere wenn in Bezug darauf, Feinstaub aus dem Rauchgas zu entfernen.

Dies umso mehr, wenn der Heizkessel einen flexiblen elektrischen Leiter aufweist und der beweglich gelagerte Wirbulator mit der Masse des Heizkessels über einen den flexiblen elektrischen Leiter elektrisch verbunden ist. Damit kann nämlich eine vergleichsweise geringe Potentialdifferenz zur Masse als Bezugspotential zur Sprühelektrode sichergestellt werden kann. Der flexible elektrische Leiter kann nämlich andere elektrische Verbindungen, beispielsweise schlecht leitende elektrische Schleifkontakte (beispielsweise mit dem Wärmetauscher) oder andere bewegte elektrische Kontakte (beispielsweise über ein Lager) überbrücken, womit der elektrische Widerstand zwischen Masse und Wirbulator gering gehalten werden kann. Die elektrische Verbindung des Wirbulators über den flexiblen elektrischen Leiter kann daher trotz des beweglich gelagerten Wirbulators für eine elektrisch ruhende Kontaktverbindung mit der Masse des Heizkessels sorgen. Damit kann die Abscheidewirkung der Kollektorelektrode bzw. des Wirbulators maßgeblich erhöht werden. Zudem kann diese erfindungsgemäße elektrische Verbindung über die Lebensdauer des Heizkessels auch eine hohe Standfestigkeit garantieren.

Im Allgemeinen wird erwähnt, dass neben dem Wirbulator als Kollektorelektrode natürlich auch noch andere Flächen in der Rauchgasführung als Kollektorelektrode Verwendung finden können, beispielsweise die Innenflächen des Rauchgaszugs des Wärmetauschers, der den Wirbulator aufweist.

Im Allgemeinen wird erwähnt, dass es vorteilhaft sein kann, wenn der Wirbulator entweder direkt über den flexiblen elektrischen Leiter oder indirekt beispielsweise über eine Potentialschiene mit der Masse des Heizkessels verbunden sein kann. Besonders vorteilhaft kann im Allgemeinen sein, wenn der beweglich gelagerte Wirbulator über den flexiblen elektrischen Leiter mit der Masse des Heizkessels ausschließlich über ruhende elektrische Kontakte elektrisch verbunden ist.

Der Abscheidegrad des elektrostatischen Abscheiders kann weiter erhöht werden, wenn der beweglich gelagerte Wirbulator eine Wendel aufweist. Dies ist nicht nur durch eine erhöhte Abscheidefläche an der Kollektorelektrode, sondern auch durch eine erhöhte Verwirbelung über die Länge des Rauchgaszugs erreichbar.

Weist der beweglich gelagerte Wirbulator einen, insbesondere geraden, Steg auf, den die Wendel umläuft und an den die Wendel befestigt ist, kann der Wirbulator mechanisch vergleichsweise robust ausgebildet werden - was auch zu einer relativ hohen thermischen Belastbarkeit der Abscheideflächen führen kann. Der erfindungsgemäße Wirbulator zeigt daher auch hohe Formstabilität, was einen hohen Abscheidegrad unabhängig vom Betriebspunkt des Heizkessels sicherstellen kann.

Der Abscheidegrad des elektrostatischen Abscheiders kann weiter erhöht werden, wenn der Wärmetauscher mehrere parallele Rauchgaszüge ausbildet, in denen je ein beweglich gelagerter Wirbulator vorgesehen ist. Zudem kann damit der Wirkungsgrad des Heizkessels erhöht werden.

Weist der elektrostatische Abscheider mindestens eine Potentialausgleichsschiene auf, an denen die beweglich gelagerten Wirbulatoren, beispielsweise lösbar, befestigt sind und verbindet der flexible elektrische Leiter die Potentialausgleichsschiene mit der Masse des Heizkessels elektrisch, können die Potentiale zwischen den Wirbulatoren gering gehalten werden - womit sich unter anderem die Abscheidewirkung des elektrostatische Abscheider über die parallelen Rauchgaszüge vergleichmäßigt. Ein hoher Abscheidegrad von Feinstaub kann dadurch sichergestellt werden.

Die Konstruktion im Bereich des elektrostatischen Abscheiders kann vereinfacht werden, wenn die parallelen Rauchgaszüge in Reihen nebeneinander und in Spalten hintereinander angeordnet sind, und dass für je eine Reihe oder eine Spalte eine Potentialausgleichsschiene vorgesehen ist, an denen die jeweiligen Wirbulatoren der Reihe bzw. Spalte der Rauchgaszüge, beispielsweise lösbar, befestigt sind. Zudem ist es dadurch möglich, einen besonders wirkungsvollen elektrostatischen Abscheider mit kleinem Widerstand in der Rauchgasführung zu erreichen.

Sind die Potentialausgleichsschienen untereinander über eigene, insbesondere flexible, elektrische Leiter elektrisch kurzgeschlossen, kann dies die Wartung des Heizkessels dahingehend erleichtern, dass einzelne Potentialausgleichsschienen einfach von der elektrischen Verbindung mit Masse getrennt bzw. verbunden werden können.

Diese Konstruktion kann weiter vereinfacht werden, wenn von den Potentialausgleichsschienen eine einzige Potentialausgleichsschiene direkt über den flexiblen elektrischen Leiter mit der Masse des Heizkessels elektrisch verbunden ist.

Eine standfeste mechanische und elektrische Verbindung zwischen Wirbulatoren und Masse kann sichergestellt werden, wenn die Potentialausgleichsschiene an den, insbesondere geraden, Stegen der beweglich gelagerten Wirbulatoren befestigt ist. Zudem kann auf diese Weise die Potentialausgleichsschiene in gleicher axialer Richtung mit den Wirbulatoren mitbewegt werden, was wiederum die mechanische Belastung auf die Wirbulatoren gering hält.

Konstruktiv einfach gelöst, kann der flexible elektrische Leiter ein Masseband sein - was zudem auch eine zuverlässige elektrische Verbindung über die Lebensdauer des Heizkessels darstellen kann.

Ist der Wirbulator an seinem, von der Sprühelektrode entfernten Ende mit der Masse des Heizkessels über den flexiblen elektrischen Leiter elektrisch verbunden, kann durch diese örtliche Trennung der Aufwand bezüglich Herstellung und Wartung des Heizkessels weiter vermindert werden. Zudem kann dies zu einer verminderte Temperaturbelastung am flexiblen elektrischen Leiter führen, was die Standfestigkeit des elektrostatischen Abscheiders kann damit weiter erhöht werden.

Die thermische Belastung des elektrostatischen Abscheiders kann weiter vermindert werden, wenn der Wärmetauscher serielle Rauchgaszüge ausbildet, wobei der Rauchgaszug mit dem als Kollektorelektrode wirkenden Wirbulator in Strömungsrichtung des Rauchgases dem anderen Rauchgaszug nachgeordnet ist. Damit kann sich unter anderem die Standfestigkeit des Heizkessels weiter erhöhen.

Der Wirkungsgrad des Wärmetauschers kann weiter erhöht werden wenn die Rauchgasführung vor dem Rauchgaszug mit dem als Kollektorelektrode wirkenden Wirbulator eine Umlenkkammer aufweist.

Vorzugsweise kann sich die Umlenkkammer zwischen den beiden seriellen Rauchgaszügen des Wärmetauschers befinden, um die Rauchgasführung kurz und damit die Baugröße des Heizkessels kompakt zu halten.

Die Abmessungen des Heizkessels sind weiter verringerbar, wenn in der Umlenckammer eine mit dem Wirbulator zu dessen Bewegung mechanische verbundene Bewegungseinrichtung und/oder die Sprühelektrode angeordnet sind.

In den Figuren ist beispielsweise der Erfindungsgegenstand anhand einer Ausführungsvariante dargestellt. Es zeigen
- Fig. 1: eine aufgerissene Seitenansicht auf einen teilweise dargestellten Heizkessel mit einem elektrostatischen Abscheider,
- Fig. 2: eine vergrößerte Detailansicht zur Fig. 1 und
- Fig. 3: eine Schnittansicht nach III-III der Fig. 1.

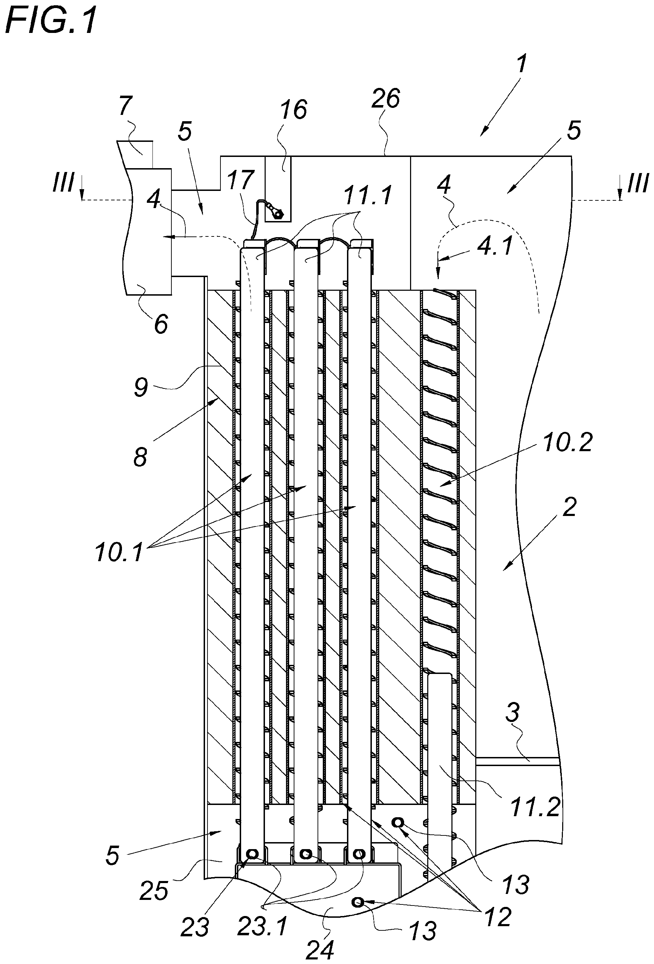

Nach Fig. 1 wird beispielsweise ein Heizkessel 1 in vereinfachter Darstellung gezeigt - umfassend eine Brennkammer 2 mit einem Rost 3 zur Verbrennung eines nicht näher darstellten Heizguts, beispielsweise Holz, Scheitholz oder andere Holzwerkstoffe.

In Strömungsrichtung 4.1 des durch die Verbrennung entstehenden Rauchgases 4 schließt an die Brennkammer 2 eine Rauchgasführung 5 an, über die das Rauchgas 4 - unterstützt durch ein Saugzuggebläse 6 - aus dem Heizkessel 1 über einen Abgasstutzen 7 abgezogen wird.

Der Heizkessel 1 weist zudem einen Wärmetauscher 8 auf, der zwischen einem in Fig. 1 angedeutet dargestellten Kesselwasser 9 und dem Rauchgas 4 eine indirekte Wärmeübertragung herstellt - und damit das Kesselwasser 9 erwärmt. Um dies zu erreichen bildet der Wärmetauscher 8 mehrere Rauchgaszüge 10.1, 10.2 der Rauchgasführung 5 aus.

In den Rauchgaszügen 10.1, 10.2 sind Wirbulatoren 11.1, 11.2 eingesetzt, welche das durch den Rauchgaszug 10.1, 10.2 strömende Rauchgas 4 verwirbeln - auf diese Weise wird der Wirkungsgrad des Wärmetauschers 8 verbessern.

Die Wirbulatoren 11.1, 11.2 dienen aber auch der Abreinigung der Rauchgaszüge 10.1, 10.2, wofür diese Wirbulatoren 11.1, 11.2 beweglich gelagert sind und damit in den Rauchgaszüge 10.1, 10.2 axial vor und zurück bewegt werden können.

Des Weiteren weist der Heizkessel 1 einen elektrostatischen Abscheider 12 auf, der in der Rauchgasführung 5 vorgesehen, Feinpartikel aus dem Rauchgas 4 abscheidet, bevor es den Heizkessel 1 als Abgas verlässt. Hierzu sind dem elektrostatischen Abscheider 12 mehrere örtlich voneinander beabstandete Sprühelektroden 13 und mehrere Kollektorelektroden 14 zugeordnet, wobei sich die Kollektorelektrode 14 im Wesentlichen im Rauchgaszug 10.1 des Wärmetauschers 8 ausbildet. Da dadurch für den elektrostatischen Abscheider 12 keine zusätzlichen Rauchgaszüge vorsehen werden müssen, ist die Baugröße des Heizkessels 1 relativ kompakt.

So bilden die Innenwände 15.1 der Wärmetauscherrohre 15 des Wärmetauschers 8 in - an sich bekannter - Weise eine Kollektorelektrode 14 aus. Diese Wärmetauscherrohre 15 sind nämlich über Schweißverbindungen elektrisch mit der Masse 16 des Heizkessels 1 elektrisch verbunden, welche Masse 16 ein Bezugspotential zum Potential der Sprühelektrode 13 darstellt. Nachteilig stellen die Innenwände 15.1 der Wärmetauscherrohre 15 allerdings eine vergleichsweise kleine Abscheidefläche dar, was zu einem geringen Abscheidegrad des elektrostatischen Abscheiders 12 führt.

Erfindungsgemäß wird der Abscheidegrad des elektrostatischen Abscheiders 12 deutlich erhöht, indem auch der beweglich gelagerte Wirbulator 11.1 eine Kollektorelektrode 14 des elektrostatischen Abscheiders 12 ausbildet. Hierfür ist der Wirbulator 11.1 mit Masse 16 des Heizkessels 1 über einen flexiblen elektrischen Leiter 17 elektrisch verbunden, was eine elektrische Verbindung mit der Masse 16 des Heizkessels über die bewegliche Lagerung des Wirbulators 11.1 und gegebenfalls auch über einen Schleifkontakt mit dem Wärmetauscherrohr 15 überbückt. Die Wirbulatoren 11.1 sind somit über den flexiblen elektrischen Leiter 17 mit der Masse 16 des Heizkessels 1 elektrisch ruhend kontaktiert. Die Bewegung der Wirbulatoren 11.1 wird vom flexible elektrischen Leiter 17 aufgenommen. Schleifkontakte und/oder elektrisch bewegte Kontakte zwischen den Wirbulatoren 11.1 und der Masse 16 des Heizkessels 1 können so vermieden bzw. elektrisch überbrückt werden.

Erfindungsgemäß kann damit eine Potentialdifferenz zwischen Wirbulator 11.1 und Masse 16 des Heizkessels vermieden werden - womit eine hohe Wirkungsweise des Wirbulator als Kollektorelektrode 14 sichergestellt werden kann. In Kombination mit der verwirbelnden Wirkung des Wirbulators 11.1 auf das Rauchgas 4 ergeben sich sohin hohe Abscheidegrade, was auch den Feinstaubanteil im Rauchgas 4 erheblich reduziert.

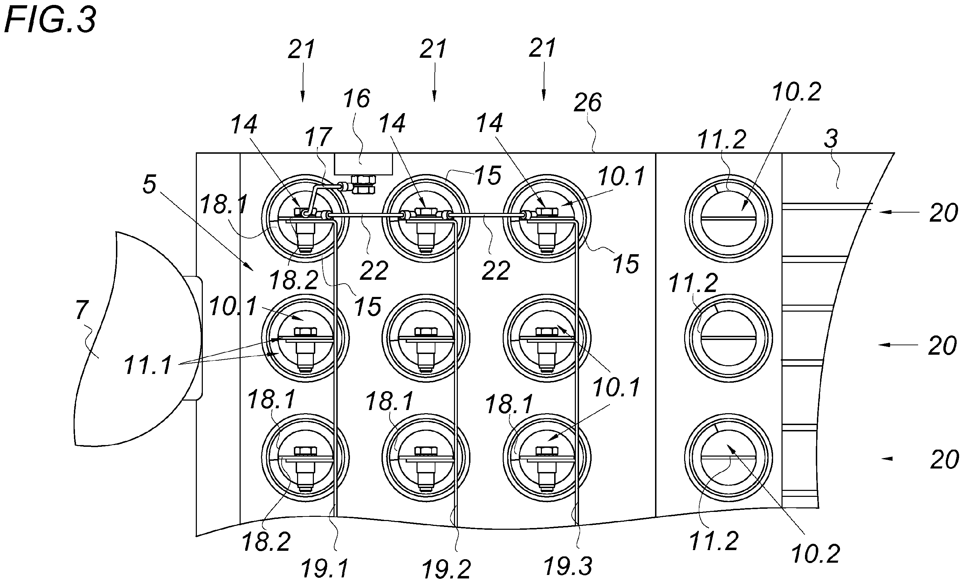

Im Allgemeinen wird erwähnt, dass der flexible elektrische Leiter 17 beispielsweise ein Kabel oder auch ein Masseband sein kann, welches Masseband eine hohe thermische und/oder chemische Beständigkeit gegenüber Rauchgas 4 sicherstellen kann. Das Masseband kann jeglichem Querschnitt beispielsweise rechteckig oder rund aufweisen und aus geflochtenen Einzeldrähten bestehen. Das Masseband kann, wie in Fig. 3 dargestellt, in gekrimpten Kontakthülsen enden, was einen standfesten elektrischen ruhenden Kontakt gewährleistet.

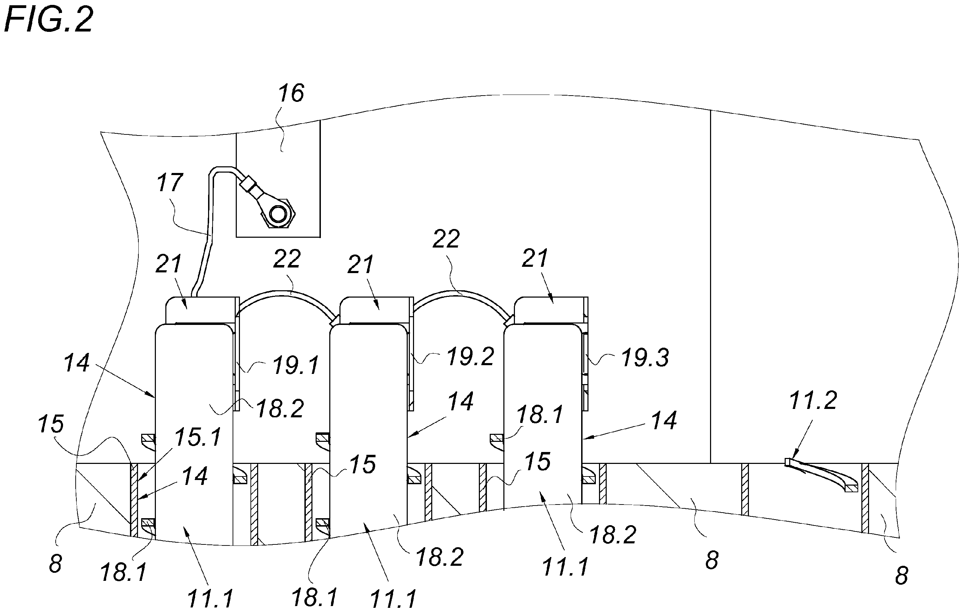

Wie den Figuren 2 und 3 im Detail zu entnehmen, weisen die beweglich gelagerten Wirbulatoren 11.1 eine Wendel 18.1 und einen geraden Steg 18.2 auf, welcher Steg 18.2 von der Wendl 18.1 umlaufen wird und an den die Wendel 18.1 durch Schweißpunkte befestigt ist. Dies verbessert nicht nur die Verwirbelung des Rauchgases 4 und in weiterer Folge den Wirkungsgrad des Wärmetauschers 8 sowie den Abscheidegrad des elektrostatischen Abscheiders 12, sondern auch die thermische Formstabilität des Wirbulators 4 - was die Standfestigkeit des Heizkessels 1 unterstützt. Der Vollständigkeit wird erwähnt, dass der Steg des Wirbulators auch ein Rohr oder auch eine gedrehter Steg sein kann, was nicht näher dargestellt worden ist. Steg 18.2 und Wendl 18.1 sind elektrisch leitend. Der elektrische Leiter 17 verbindet von der Masse 16 zum Wirbulator 11.1 elektrisch. Beispielsweise damit auch von der Masse 16 zur Wendel 18.1 des Wirbulators 11.1 elektrisch.

Wie insbesondere der Fig. 1 und der Fig. 3 zu entnehmen, bildet der Wärmetauscher 8 mehrere parallele Rauchgaszüge 10.1 aus, in denen je ein beweglich gelagerter Wirbulator 11.1 vorgesehen ist. Damit kann der Abscheidegrad des elektrostatischen Abscheiders 12 weiter erhöht werden. Mehrere Wirbulatoren 11.1 der parallelen Rauchgaszüge 10.1 sind an Potentialausgleichsschienen 19.1, 19.2, 19.3 befestigt - nämlich, indem die geraden Stege 18.2 der Wirbulatoren 11.1 mit je einem Vorsprung an der jeweiligen Potentialausgleichsschiene 19.1, 19.2, 19.3 verschraubt sind. Die Potentialausgleichsschiene 19.1, 19.2, 19.3 ist über den flexiblen elektrischen Leiter 17 mit der Masse 16 des Heizkessels 1 beispielsweise direkt elektrisch verbunden. Es ist aber auch vorstellbar, was nicht näher dargestellt worden ist, dass die Wirbulatoren 11.1 einzeln über je einen flexiblen elektrischen Leiter 17 mit der mit der Masse 16 des Heizkessels 1 verbunden sind.

In Fig. 3 ist zu erkennen, dass die parallelen Rauchgaszüge 11.1 in Reihen 20 nebeneinander und in Spalten 21 hintereinander angeordnet sind. Für jede Spalte 21 ist eine Potentialausgleichsschiene 19.1 bzw. 19.2 bzw. 19.3 vorgesehen, an denen die jeweiligen Wirbulatoren 11.1 der Spalte 21 der parallelen Rauchgaszüge 10.1 befestigt sind. Dadurch, dass die Potentialausgleichsschienen 19.1, 19.2, 19.3 untereinander über je einen weitere eigenen - also von dem flexible elektrische Leiter 17 unterschiedliche - flexible elektrische Leiter 22 elektrisch kurzgeschlossen sind, kann eine gleichmäßige Potentialverteilung an der Kollektorelektrode 14 sichergestellt werden. Durch diese elektrische Verschaltung ist es auch ausreichend, wenn von den Potentialausgleichsschienen 19.1, 19.2, 19.3 nur eine einzige Potentialausgleichsschiene 19.1 über den flexiblen elektrischen Leiter 17 direkt mit der Masse 16 des Heizkessels 1 elektrisch verbunden ist.

Die Wirbulatoren 11.1 sind über die Gelenke 23.1 des Stelltriebs 23, was beispielsweise ein Exzenter- oder Kurbeltriebtrieb sein kann, mit einer Bewegungseinrichtung 24 verbunden, welche die Wirbulatoren 11.1 in den Rauchgaszüge 10.1 axial vor und zurück bzw. hin und her bewegt. Damit kann die Wendel 18.1 der Wirbulatoren 11.1 die Rauchgaszüge 10.1 gereinigt und zudem können dadurch die Wirbulatoren 11.1 mitgereinigt wird.

Wie in Fig. 1 weiter zu erkennen, ist der Wirbulator 11.1 am jenem - im Ausführungsbeispiel oberen - Ende mit der Masse 16 des Heizkessels 1 über den flexiblen elektrischen Leiter 17 elektrisch verbunden, das liegt dem Ende gegenüber, an dem er mit der Bewegungseinrichtung 24 mechanisch verbunden ist. Diese örtliche Trennung erleichtert die Wartung, sei es an der Bewegungseinrichtung 24 oder an der elektrischen Verbindung des elektrostatischen Abscheiders 12.

Der Wärmetauscher 8 bildet auch seriell geschaltete Rauchgaszüge 10.1, 10.2 aus. Der Rauchgaszug 10.1 mit dem Wirbulator 11.1 als Kollektorelektrode 14 ist in Strömungsrichtung 4.1 des Rauchgases 4 dem anderen Rauchgaszug 10.2 nachgeordnet.

Zwischen den seriell geschalteten Rauchgaszügen 10.1, 10.2 ist eine Umlenkkammer 25 der Rauchgasführung 5 angeordnet. In dieser Umlenkkammer 25 ist die Bewegungseinrichtung 24 und die Sprühelektroden 13 angeordnet, was kompakte Konstruktionsverhältnisse am Heizkessel 1 ermöglicht.

Als Masse 16 des Heizkessels 1 dient beispielsweise Erdpotential, wobei die Masse 16 am Gehäuse 26 des Heizkessels 1 anliegt, wie in Fig. 1 zu erkennen.

## Patentansprüche

1. Heizkessel mit einer Rauchgasführung (5), die mindestens einen Rauchgaszug (10.1) aufweist, mit mindestens einem zur Erwärmung eines Kesselwassers (9) vorgesehenen Wärmetauscher (8), der wenigstens einen Rauchgaszug der Rauchgasführung (5) ausbildet, mit zumindest einem beweglich gelagerten Wirbulator (11.1), der im Rauchgaszug (10.1) des Wärmetauschers (8) vorgesehen ist, und mit einem elektrostatischen Abscheider (12), der wenigstens eine Kollektorelektrode (14) im Rauchgaszug (10.1) des Wärmetauschers (8) und mindestens eine Sprühelektrode (13) aufweist, welche Kollektorelektrode (14) mit Masse (16) des Heizkessels als Bezugspotential zum Potential der Sprühelektrode (13) elektrisch verbunden ist, wobei der Heizkessel (1) einen flexiblen elektrischen Leiter (17) aufweist und wobei zumindest der beweglich gelagerte Wirbulator (11.1) die Kollektorelektrode (14) des elektrostatischen Abscheiders (12) ausbildet und hierfür der beweglich gelagerte Wirbulator (11.1) mit der Masse (16) des Heizkessels (1) über den flexiblen elektrischen Leiter (17) elektrisch verbunden ist.

2. Heizkessel nach Anspruch 1, **dadurch gekennzeichnet, dass** der beweglich gelagerte Wirbulator (11.1) eine Wendel (18.1) aufweist.

3. Heizkessel nach Anspruch 2, **dadurch gekennzeichnet, dass** der beweglich gelagerte Wirbulator (11.1) einen, insbesondere geraden, Steg (18.2) aufweist, den die Wendel (18.1) umläuft und an den die Wendel (18.1) befestigt ist.

4. Heizkessel nach einem der Ansprüche 1 bis 3, **dadurch gekennzeichnet, dass** der Wärmetauscher (8) mehrere parallele Rauchgaszüge (10.1) ausbildet, in denen je ein beweglich gelagerter Wirbulator (11.1) vorgesehen ist.

5. Heizkessel nach Anspruch 4, **dadurch gekennzeichnet, dass** der elektrostatische Abscheider (12) mindestens eine Potentialausgleichsschiene (19.1, 19.2, 19.3) aufweist, an denen die beweglich gelagerten Wirbulatoren (11.1) befestigt sind und dass der flexible elektrische Leiter (17) die Potentialausgleichsschiene (19.1) mit der Masse (16) des Heizkessels elektrisch verbindet.

6. Heizkessel nach Anspruch 4 oder 5, **dadurch gekennzeichnet, dass** die parallelen Rauchgaszüge (10.1) in Reihen (20) nebeneinander und in Spalten (21) hintereinander angeordnet sind, und dass für je eine Reihe (20) oder eine Spalte (21) eine Potentialausgleichsschiene (19.1, 19.2, 19.3) vorgesehen ist, an denen die jeweiligen Wirbulatoren (11.1) der Reihe (20) bzw. der Spalte (21) der Rauchgaszüge (10.1) befestigt sind.

7. Heizkessel nach Anspruch 6, **dadurch gekennzeichnet, dass** die Potentialausgleichsschienen (19.1, 19.2, 19.3) untereinander über eigene, insbesondere flexible, elektrische Leiter (22) elektrisch kurzgeschlossen sind.

8. Heizkessel nach Anspruch 7, **dadurch gekennzeichnet, dass** von den Potentialausgleichsschienen (19.1, 19.2, 19.3) eine einzige Potentialausgleichsschiene (19.1) direkt über den flexiblen elektrischen Leiter (17) mit der Masse (16) des Heizkessels (1) elektrisch verbunden ist.

9. Heizkessel nach einem der Ansprüche 1 bis 8, **dadurch gekennzeichnet, dass** die Potentialausgleichsschiene (19.1, 19.2, 19.3) an den, insbesondere geraden, Stegen (18.2) der beweglich gelagerten Wirbulatoren (11.1) befestigt ist.

10. Heizkessel nach einem der Ansprüche 1 bis 9, **dadurch gekennzeichnet, dass** der flexible elektrische Leiter (17) ein Masseband ist.

11. Heizkessel nach einem der Ansprüche 1 bis 10, **dadurch gekennzeichnet, dass** der Wirbulator (11.1) an seinem, von der Sprühelektrode (13) entfernten Ende mit der Masse (16) des Heizkessels (1) über den flexiblen elektrischen Leiter (17) elektrisch verbunden ist.

12. Heizkessel nach einem der Ansprüche 1 bis 11, **dadurch gekennzeichnet, dass** der Wärmetauscher (8) serielle Rauchgaszüge (10.1, 10.2) ausbildet, wobei der Rauchgaszug (10.1) mit dem als Kollektorelektrode (14) wirkenden Wirbulator (11.1) in Strömungsrichtung (4.1) des Rauchgases (4) dem anderen Rauchgaszug (10.2) nachgeordnet ist.

13. Heizkessel nach einem der Ansprüche 1 bis 12, **dadurch gekennzeichnet, dass** die Rauchgasführung (5) vor dem Rauchgaszug (10.1) mit dem als Kollektorelektrode (14) wirkenden Wirbulator (11.1) eine Umlenkkammer (25) aufweist.

14. Heizkessel nach Anspruch 12 und 13, **dadurch gekennzeichnet, dass** sich die Umlenkkammer (25) zwischen den beiden seriellen Rauchgaszügen (10.1, 10.2) des Wärmetauschers (8) befindet.

15. Heizkessel nach Anspruch 13 oder 14, **dadurch gekennzeichnet, dass** in der Umlenkkammer (25) eine mit dem Wirbulator (11.1) zu dessen Bewegung mechanische verbundene Bewegungseinrichtung (24) und/oder die Sprühelektrode (13) angeordnet sind.

## Claims

1. Heating boiler with a flue gas duct (5) which has at least one flue gas pass (10.1), having at least one heat exchanger (8) which is provided for heating a boiler water (9) and forms at least one flue gas pass of the flue gas duct (5), having at least one movably mounted vortex generator (11.1), which is provided in the flue gas pass (10.1) of the heat exchanger (8), and having an electrostatic precipitator (12), which forms at least one collector electrode (14) in the flue gas pass (10.1) of the heat exchanger (8) and at least one spray electrode (13), which collector electrode (14) is electrically connected to earth (16) of the boiler as reference potential to the potential of the spray electrode (13), wherein the boiler (1) has a flexible electrical conductor (17) and wherein at least the movably mounted vortex generator (11.1) forms the collector electrode (14) of the electrostatic precipitator (12) and for this purpose the movably mounted vortex generator (11.1) is electrically connected to the earth (16) of the heating boiler (1) via the flexible electrical conductor (17).

2. Heating boiler according to claim 1, **characterized in that** the movably mounted vortex generator (11.1) has a helix (18.1).

3. Heating boiler according to claim 2, **characterized in that** the movably mounted vortex generator (11.1) has a web (18.2), more particularly a straight web, around which the helix (18.1) extends and to which the helix (18.1) is fastened.

4. Heating boiler according to one of claims 1 to 3, **characterized in that** the heat exchanger (8) forms a plurality of parallel flue gas passes (10.1), in each of which a movably mounted vortex generator (11.1) is provided.

5. Heating boiler according to claim 4, **characterized in that** the electrostatic separator (12) has at least one equipotential bonding rail (19.1, 19.2, 19.3), to which the movably mounted vortex generators (11.1) are fastened, and **in that** the flexible electrical conductor (17) electrically connects the equipotential bonding rail (19.1) to the earth (16) of the heating boiler.

6. Heating boiler according to claim 4 or 5, **characterized in that** the parallel flue gas passes (10.1) are arranged in rows (20) next to one another and in columns (21) behind one another, and **in that** an equipotential bonding rail (19.1, 19.2, 19.3) is provided for each row (20) or column (21), to which the respective vortex generators (11.1) of the row (20) or column (21) of the flue gas passes (10.1) are fastened.

7. Heating boiler according to claim 6, **characterized in that** the equipotential bonding rails (19.1, 19.2, 19.3) are electrically short-circuited to one another via their own, more particularly flexible, electrical conductors (22).

8. Heating boiler according to claim 7, **characterized in that** of the equipotential bonding rails (19.1, 19.2, 19.3), a single equipotential bonding rail (19.1) is electrically connected directly to the earth (16) of the heating boiler (1) via the flexible electrical conductor (17).

9. Heating boiler according to one of claims 1 to 8, **characterized in that** the equipotential bonding rail (19.1, 19.2, 19.3) is fastened to the, more particularly straight, webs (18.2) of the movably mounted vortex generators (11.1).

10. Heating boiler according to one of claims 1 to 9, **characterized in that** the flexible electrical conductor (17) is an earth strap.

11. Heating boiler according to one of claims 1 to 10, **characterized in that** the vortex generator (11.1) is electrically connected at its end remote from the spray electrode (13) to the earth (16) of the heating boiler (1) via the flexible electrical conductor (17).

12. Heating boiler according to one of claims 1 to 11, **characterized in that** the heat exchanger (8) forms serial flue gas passes (10.1, 10.2), wherein the flue gas pass (10.1) with the vortex generator (11.1) acting as collector electrode (14) is arranged downstream of the other flue gas pass (10.2) in the direction of flow (4.1) of the flue gas (4).

13. Heating boiler according to one of claims 1 to 12, **characterized in that** the flue gas duct (5) has a deflection chamber (25) upstream of the flue gas pass (10.1) with the vortex generator (11.1) acting as a collector electrode (14).

14. Heating boiler according to claims 12 and 13, **characterized in that** the deflection chamber (25) is located between the two serial flue gas passes (10.1, 10.2) of the heat exchanger (8).

15. Heating boiler according to claim 13 or 14, **characterized in that** a movement device (24) mechanically connected to the vortex generator (11.1) for its movement and/or the spray electrode (13) are arranged in the deflection chamber (25).

## Revendications

1. Chaudière avec une conduite de gaz brûlés (5) comportant au moins un carneau (10.1), avec au moins un échangeur de chaleur (8) destiné à chauffer une eau de chaudière (9) qui forme au moins un carneau de la conduite de gaz brûlés (5), avec au moins un turbulateur (11.1) supporté de façon mobile qui est prévu dans le carneau (10.1) de l'échangeur de chaleur (8) et avec un séparateur électrostatique (12) qui comprend au moins une électrode collectrice (14) dans le carneau (10.1) de l'échangeur de chaleur (8) et au moins une électrode à couronne (13), l'électrode collectrice (14) étant reliée à la masse (16) de la chaudière comme potentiel de référence du potentiel de l'électrode à couronne (13), la chaudière (1) comportant un conducteur électrique flexible (17) et le turbulateur (11.1) supporté de façon mobile, au minimum, formant l'électrode collectrice (14) du séparateur électrostatique (12) et le turbulateur (11.1) supporté de façon mobile étant, pour cela, relié électriquement à la masse (16) de la chaudière (1) par le conducteur électrique flexible (17).

2. Chaudière selon la revendication 1, **caractérisée en ce que** le turbulateur (11.1) supporté de façon mobile comporte un serpentin (18.1).

3. Chaudière selon la revendication 2, **caractérisée en ce que** le turbulateur (11.1) supporté de façon mobile comporte une barrette (18.2), en particulier droite, qui entoure le serpentin (18.1) et qui est fixée au serpentin (18.1).

4. Chaudière selon l'une des revendications 1 à 3, **caractérisée en ce que** l'échangeur de chaleur (8) forme plusieurs carneaux (10.1) parallèles, dans chacun desquels un turbulateur (11.1) supporté de façon mobile est prévu.

5. Chaudière selon la revendication 4, **caractérisée en ce que** le séparateur électrostatique (12) comporte au moins une barre d'équipotentiel (19.1, 19.2, 19.3) sur laquelle les turbulateurs (11.1) supportés de façon mobile sont fixés et **en ce que** le conducteur électrique flexible (17) relie électriquement la barre d'équipotentiel (19.1) à la masse (16) de la chaudière.

6. Chaudière selon la revendication 4 ou 5, **caractérisée en ce que** les carneaux (10.1) parallèles sont disposés en rangées (20) les uns à côté des autres et en colonnes (21) les uns derrière les autres et **en ce qu'**est prévue pour chaque rangée (20) ou chaque colonne (21) une barre d'équipotentiel (19.1, 19.2, 19.3) sur laquelle est fixé le turbulateur (11.1) correspondant de la rangée (20) ou de la colonne (21) des carneaux (10.1).

7. Chaudière selon la revendication 6, **caractérisée en ce que** les barres d'équipotentiel (19.1, 19.2, 19.3) sont court-circuitées électriquement entre elles par des conducteurs électriques (22) propres, en particulier flexibles.

8. Chaudière selon la revendication 7, **caractérisée en ce que**, parmi les barres d'équipotentiel (19.1, 19.2, 19.3), une seule barre d'équipotentiel (19.1) est reliée électriquement à la masse (16) de la chaudière (1) directement par le conducteur électrique flexible (17).

9. Chaudière selon l'une des revendications 1 à 8, **caractérisée en ce que** la barre d'équipotentiel (19.1, 19.2, 19.3) est fixée aux barrettes (18.2), en particulier droites, du turbulateur (11.1) supporté de façon mobile.

10. Chaudière selon l'une des revendications 1 à 9, **caractérisée en ce que** le conducteur électrique flexible (17) est un ruban de mise à la masse.

11. Chaudière selon l'une des revendications 1 à 10, **caractérisée en ce que** le turbulateur (11.1) est relié électriquement à la masse (16) de la chaudière (1) par le conducteur électrique flexible (17) à son extrémité distante de l'électrode à couronne (13).

12. Chaudière selon l'une des revendications 1 à 11, **caractérisée en ce que** l'échangeur de chaleur (8) forme des carneaux (10.1, 10.2) en série, le carneau (10.1) muni du turbulateur (11.1) qui sert d'électrode collectrice (14) étant disposé en aval de l'autre carneau (10.2) dans le sens de circulation (4.1) des gaz brûlés (4).

13. Chaudière selon l'une des revendications 1 à 12, **caractérisée en ce que** la conduite de gaz brûlés (5) comporte une chambre de déviation (25) avant le carneau (10.1) muni du turbulateur (11.1) servant d'électrode collectrice (14).

14. Chaudière selon les revendications 12 et 13, **caractérisée en ce que** la chambre de déviation (25) se trouve entre les deux carneaux (10.1, 10.2) en série de l'échangeur de chaleur (8).

15. Chaudière selon la revendication 13 ou 14, **caractérisée en ce qu'**un dispositif de mise en mouvement (24) en liaison mécanique avec le turbulateur (11.1) pour mettre celui-ci en mouvement et/ou l'électrode à couronne (13) sont disposés dans la chambre de déviation (25).
